# EUROPÄISCHE PATENTANMELDUNG

(11) **EP 2 982 434 A1**
(43) Veröffentlichungstag der Anmeldung: **10.02.2016**
(21) Anmeldenummer: 14179780.3
(22) Anmeldetag: 05.08.2014
(51) Int. Cl.: B01J 37/02, B01J 37/03, B01J 23/10, B01J 23/40, B01J 23/46, B01D 53/94, F01N 3/08

(54) **Katalysator zur Reduktion von Stickoxiden**

(71) Anmelder: Umicore AG & Co. KG, 63457 Hanau-Wolfgang (DE)
(72) Erfinder: Utschig, Thomas, 60598 Frankfurt am Main (DE); Hoyer, Rüdiger, 63755 Alzenau-Hörstein (DE); Müller, Elena, 64319 Pfungstadt (DE)

(57) **Zusammenfassung**

Die vorliegende Erfindung betrifft einen Stickoxid-Speicherkatalysator aus mindestens zwei katalytisch aktiven Washcoatschichten auf einem Tragköper, wobei eine untere Washcoatschicht A Ceroxid, eine Erdalkaliverbindung und/oder Alkaliverbindung, sowie Platin und Palladium enthält und eine obere Washcoatschicht B, die über der Washcoatschicht A angeordnet ist, Ceroxid, Platin und Palladium und keine Alkali- und Erdalkaliverbindung enthält, sowie ein Verfahren zur Konvertierung von NOₓ in Abgasen von Kraftfahrzeugen, die mit mager betriebenen Motoren, betrieben werden.

## Beschreibung

Die vorliegende Erfindung betrifft einen Katalysator zur Reduktion von Stickoxiden, das im Abgas mager betriebener Verbrennungsmotoren enthalten ist.

Das Abgas von Kraftfahrzeugen, die mit mager betriebenen Verbrennungsmotoren, beispielsweise mit Dieselmotoren, betrieben werden, enthält neben Kohlenmonoxid (CO) und Stickoxiden (NOₓ) auch Bestandteile, die aus der unvollständigen Verbrennung des Kraftstoffs im Brennraum des Zylinders herrühren. Dazu gehören neben Rest-Kohlenwasserstoffen (HC), die meist ebenfalls überwiegend gasförmig vorliegen, Partikelemissionen, auch als "Dieselruß" oder "Rußpartikel" bezeichnet. Dabei handelt es sich um komplexe Agglomerate aus überwiegend Kohlenstoff-haltigen FeststoffTeilchen und einer anhaftenden Flüssigphase, die meist mehrheitlich aus längerkettigen Kohlenwasserstoff-Kondensaten besteht. Die auf den festen Bestandteilen anhaftende Flüssigphase wird auch als "Soluble Organic Fraction SOF" oder "Volatile Organic Fraction VOF" bezeichnet.

Zur Reinigung dieser Abgase müssen die genannten Bestandteile möglichst vollständig in unschädliche Verbindungen umgewandelt werden, was nur unter Einsatz geeigneter Katalysatoren möglich ist.

Zur Entfernung der Stickoxide sind sogenannte Stickoxid-Speicherkatalysatoren, für die auch der Begriff "Lean NOx Trap" oder LNT üblich ist, bekannt. Deren Reinigungswirkung beruht darauf, dass in einer mageren Betriebsphase des Motors die Stickoxide vom Speichermaterial des Speicherkatalysators vorwiegend in Form von Nitraten gespeichert werden und diese in einer darauf folgenden fetten Betriebsphase des Motors wieder zersetzt und die so freiwerdenden Stickoxide mit den reduzierenden Abgasanteilen am Speicherkatalysator zu Stickstoff, Kohlendioxid und Wasser umgesetzt werden. Diese Arbeitsweise ist beispielsweise in der SAE-Schrift SAE 950809 beschrieben.

Als Speichermaterialien kommen insbesondere Oxide, Carbonate oder Hydroxide von Magnesium, Calcium, Strontium, Barium, der Alkalimetalle, der Seltenerdmetalle oder Mischungen davon in Frage. Diese Verbindungen sind aufgrund ihrer basischen Eigenschaften in der Lage, mit den sauren Stickoxiden des Abgases Nitrate zu bilden und sie auf diese Weise abzuspeichern. Sie sind zur Erzeugung einer großen Wechselwirkungsfläche mit dem Abgas in möglichst hoher Dispersion auf geeigneten Trägermaterialien abgeschieden. Stickoxid-Speicherkatalysatoren enthalten darüber hinaus in der Regel Edelmetalle wie Platin, Palladium und/oder Rhodium als katalytisch aktive Komponenten. Deren Aufgabe ist es einerseits, unter mageren Bedingungen NO zu NO₂, sowie CO und HC zu CO₂ zu oxidieren und andererseits während der fetten Betriebsphasen, in denen der Stickoxid-Speicherkatalysator regeneriert wird, freigesetztes NO₂ zu Stickstoff zu reduzieren.

Mit der Veränderung der Abgasgesetzgebung nach Euro 6 werden zukünftige Abgassysteme sowohl bei kalten Temperaturen im Stadtzyklus, als auch bei hohen Temperaturen, wie sie bei hohen Lasten auftreten, ausreichende NOₓ-Konvertierung aufweisen müssen. Bekannte Stickoxid-Speicherkatalysatoren zeigen aber entweder eine ausgeprägte NOₓ-Speicherung bei niedrigen oder bei hohen Temperaturen. Eine gute NOₓ-Konvertierung über einen breiten Temperaturbereich von 200 bis 450°C, die zur Erfüllung künftiger Abgasgesetzgebung unerlässlich ist, kann bisher nicht erreicht werden.

Die EP 0 885 650 A2 beschreibt einen Abgasreinigungskatalysator für Verbrennungsmotoren mit zwei katalytisch aktiven Schichten auf einem Tragkörper. Die auf dem Tragkörper befindliche Schicht umfasst ein oder mehrere hochdisperse Erdalkalioxide, mindestens ein Platingruppenmetall, sowie wenigstens ein feinteiliges, Sauerstoff speicherndes Material. Dabei stehen die Platingruppenmetalle mit allen Bestandteilen der ersten Schicht in enger Berührung. Die zweite Schicht steht mit dem Abgas in direktem Kontakt und enthält mindestens ein Platingruppenmetall, sowie wenigstens ein feinteiliges, Sauerstoff speicherndes Material. Nur ein Teil der feinteiligen Feststoffe der zweiten Schicht dient als Träger für die Platingruppenmetalle. Der Katalysator ist ein Dreiwegekatalysator, der die schädlichen Abgaskomponenten im Wesentlichen bei stöchiometrischen Bedingungen, d.h. bei der Luftzahl λ von 1 umsetzt.

Aus der US2009/320457 ist ein Stickoxid-Speicherkatalysator bekannt, der zwei übereinander liegende Katalysatorschichten auf einem Trägersubstrat umfasst. Die untere, direkt auf dem Trägersubstrat liegende Schicht umfasst ein oder mehrere Edelmetalle, sowie ein oder mehrere Stickoxid-Speicherkomponenten. Die obere Schicht umfasst ein oder mehrere Edelmetalle, sowie Ceroxid und ist frei von Alkali- oder Erdalkalikomponenten.

Katalysatorsubstrate, die Stickoxid-Speichermaterialien enthalten und zwei oder mehr Schichten aufweisen, sind auch in der WO 2012/029050 beschrieben. Die erste Schicht befindet sich direkt auf dem Trägersubstrat und umfasst Platin und/oder Palladium, während sich die zweite Schicht auf der ersten befindet und Platin umfasst. Beide Schichten enthalten außerdem ein oder mehrere Sauerstoffspeichermaterialien und ein oder mehrere Stickoxid-Speichermaterialien, die ein oder mehrere Alkali- und/oder Erdalkalimetalle umfassen. Die Gesamtmenge an Alkali- und Erdalkalimetall in den Stickoxid-Speichermaterialien beträgt 0,18 bis 2,5 g/in³, berechnet als Alkalimetalloxid M₂O und Erdalkalimetalloxid MO.

Die vorliegende Erfindung betrifft einen Stickoxid-Speicherkatalysator aus mindestens zwei katalytisch aktiven Washcoatschichten auf einem Tragköper, wobei
- eine untere Washcoatschicht A Ceroxid in einer Menge von 110 bis 180 g/l bezogen auf das Volumen des Tragkörpers, eine Erdalkaliverbindung und/oder eine Alkaliverbindung, sowie Platin und Palladium enthält;
- eine obere Washcoatschicht B, die über der Washcoatschicht A angeordnet ist, Ceroxid, sowie Platin und Palladium enthält und frei ist von Alkali- und Erdalkaliverbindungen;
- das Verhältnis von Ceroxid in Washcoatschicht A zu Ceroxid in Washcoatschicht B, gerechnet jeweils in g/l, bezogen auf das Volumen des Tragkörpers, 1:1 bis 5:1 beträgt, wobei die Summe von Ceroxid in Washcoatschicht A und Washcoatschicht B, gerechnet in g/l und bezogen auf das Volumen des Tragkörpers, 132 bis 240 g/l beträgt;
- das Verhältnis Pt:Pd gerechnet jeweils in g/l, bezogen auf das Volumen des Tragkörpers, in Washcoatschicht A und Washcoatschicht B gleich ist und 2:1 bis 20:1 beträgt;
- die Summe von Platin und Palladium, gerechnet jeweils in g/l und bezogen auf das Volumen des Tragkörpers, in Washcoatschicht A und Washcoatschicht B gleich sind; und
- das Verhältnis der Konzentrationen von Platin und Palladium in Washcoatschicht A zu Platin und Palladium in Washcoatschicht B, jeweils bezogen auf die Gesamtmasse der jeweiligen Washcoatschicht, gerechnet jeweils in g/l, bezogen auf das Volumen des Tragkörpers, 1:1 bis 1:5 beträgt.

Das in den Washcoatschichten A und B eingesetzte Ceroxid kann handelsüblicher Qualität sein, d.h. einen Ceroxid-Anteil von 90 bis 100 Gew.-% aufweisen.

In einer Ausführungsform der vorliegenden Erfindung wird Ceroxid in der Washcoatschicht A in einer Menge von 110 bis 160 g/l, beispielsweise 125 bis 145 g/l, eingesetzt. In der Washcoatschicht B wird Ceroxid in Mengen von 22 bis 120 g/l, beispielsweise 40 bis 100 g/l oder 45 bis 65 g/l eingesetzt.

Die Gesamt-Washcoatbeladung des Tragkörpers beträgt in Ausführungsformen der vorliegenden Erfindung 300 bis 600 g/l, bezogen auf das Volumen des Tragkörpers. Daraus ergibt sich dass die Beladung mit Washcoatschicht A 150 bis 500 g/l und die Beladung mit Washcoatschicht B 50 bis 300 g/l, jeweils bezogen auf das Volumen des Tragkörpers, beträgt. In weiteren Ausführungsformen der vorliegenden Erfindung beträgt die Beladung mit Washcoatschicht A 250 bis 300g/l, und mit Washcoatschicht B 50 bis 150 g/l, jeweils bezogen auf das Volumen des Tragkörpers.

Das Verhältnis Platin zu Palladium ist in den Washcoatschichten A und B gleich und beträgt in Ausführungsformen der vorliegenden Erfindung beispielsweise 4:1 bis 18:1 oder 6:1 bis 16:1, beispielsweise 8:1, 10:1, 12:1 oder 14:1.

In Ausführungsformen der vorliegenden Erfindung enthalten Washcoatschicht A und/oder Washcoatschicht B als weiteres Edelmetall Rhodium. Rhodium liegt in diesem Fall insbesondere in Mengen von 0,1 bis 10 g/ft³ (entspricht 0,003 bis 0,35 g/l), bezogen auf das Volumen des Tragkörpers, vor.

Sowohl in der Washcoatschicht A, als auch in der Washcoatschicht B liegen die Edelmetalle Platin und Palladium und gegebenenfalls Rhodium üblicherweise auf geeigneten Trägermaterialien vor. Als solche werden hochoberflächige, hochschmelzende Oxide verwendet, beispielsweise Aluminiumoxid, Siliziumdioxid, Titandioxid, aber auch Mischoxide wie beispielsweise Aluminium-Silizium-Mischoxide und Cer-Zirkon-Mischoxide. In Ausführungsformen der vorliegenden Erfindung wird als Trägermaterial für die Edelmetalle Aluminiumoxid verwendet, insbesondere solches, das durch 1 bis 6 Gew.-%, insbesondere 4 Gew.-%, Lanthanoxid stabilisiert ist.

Es ist bevorzugt, wenn die Edelmetalle Platin, Palladium bzw. Rhodium lediglich auf einem oder mehreren der oben genannten Trägermaterialien geträgert sind und somit nicht mit allen Bestandteilen der jeweiligen Washcoatschicht in enger Berührung stehen.

Als Erdalkaliverbindung in der Washcoatschicht A kommen insbesondere Oxide, Carbonate oder Hydroxide von Magnesium, Strontium und Barium in Frage, besonders Magnesiumoxid, Bariumoxid und Strontiumoxid.
Als Alkaliverbindung in der Washcoatschicht A kommen insbesondere Oxide, Carbonate oder Hydroxide von Lithium, Kalium und Natrium in Frage.

In Ausführungsformen der vorliegenden Erfindung liegt die Erdalkali- bzw. Alkaliverbindung in Mengen von 10 bis 50 g/l, besonders 15 bis 20 g/l, berechnet als Erdalkali- bzw. Alkalioxid, vor.

In einer bevorzugten Ausführungsform betrifft die vorliegende Erfindung einen Stickoxid-Speicherkatalysator aus mindestens zwei katalytisch aktiven Washcoatschichten auf einem Tragköper,
wobei
- eine untere Washcoatschicht A
   o Ceroxid in einer Menge von 100 bis 160 g/l,
   o Platin und Palladium im Massenverhältnis 10:1, sowie
   o Magnesiumoxid und/oder Bariumoxid; enthält und
- eine obere Washcoatschicht B über der unteren Washcoatschicht A angeordnet ist und
   o keine Erdalkaliverbindung und keine Alkaliverbindung,
   o Platin und Palladium im Massenverhältnis 10:1, sowie
   o Ceroxid in einer Menge von 45 bis 65 g/l
enthält, wobei die Washcoatschicht A in Mengen von 250 bis 350 g/l und die Washcoatschicht B in Mengen von 80 bis 130 g/l vorliegt und wobei sich die Mengenangabe g/l jeweils auf das Volumen des Tragkörpers bezieht.

Die Aufbringung der katalytisch aktiven Waschcoatschichten A und B auf den Tragkörper erfolgt nach den üblichen Tauchbeschichtungsverfahren bzw. Pump- und Saug-Beschichtungsverfahren mit sich anschließender thermischer Nachbehandlung (Kalzination und gegebenenfalls Reduktion mit Formiergas oder Wasserstoff). Diese Verfahren sind aus dem Stand der Technik hinreichend bekannt.

Die erfindungsgemäßen Stickoxid-Speicherkatalysatoren eignen sich in hervorragender Weise zur Konvertierung von NOₓ in Abgasen von Kraftfahrzeugen, die mit mager betriebenen Motoren, etwa Dieselmotoren, betrieben werden. Sie erreichen eine gute NOx-Konvertierung bei Temperaturen von circa 200 bis 450°C, ohne dass NOx-Konvertierung bei hohen Temperaturen negativ beeinflusst wird. Die erfindungsgemäßen Stickoxid-Speicherkatalysatoren sind somit für Euro 6 Anwendungen geeignet.
Die vorliegende Erfindung betrifft somit auch ein Verfahren zur Konvertierung von NOₓ in Abgasen von Kraftfahrzeugen, die mit mager betriebenen Motoren, etwa Dieselmotoren, betrieben werden, das dadurch gekennzeichnet ist, dass das Abgas über einen Stickoxid-Speicherkatalysator aus mindestens zwei katalytisch aktiven Washcoatschichten auf einem Tragköper geleitet wird, wobei
- eine untere Washcoatschicht A Ceroxid in einer Menge von 110 bis 180 g/l bezogen auf das Volumen des Tragkörpers, eine Erdalkaliverbindung und/oder eine Alkaliverbindung, sowie Platin und Palladium enthält;
- eine obere Washcoatschicht B, die über der Washcoatschicht A angeordnet ist, Ceroxid, sowie Platin und Palladium enthält und frei ist von Alkali- und Erdalkaliverbindungen;
- das Verhältnis von Ceroxid in Washcoatschicht A zu Ceroxid in Washcoatschicht B, gerechnet jeweils in g/l, bezogen auf das Volumen des Tragkörpers, 1:1 bis 5:1 beträgt, wobei die Summe von Ceroxid in Washcoatschicht A und Washcoatschicht B, gerechnet in g/l und bezogen auf das Volumen des Tragkörpers, 132 bis 240 g/l beträgt;
- das Verhältnis Pt:Pd gerechnet jeweils in g/l, bezogen auf das Volumen des Tragkörpers, in Washcoatschicht A und Washcoatschicht B gleich ist und 2:1 bis 20:1 beträgt;
- die Summe von Platin und Palladium, gerechnet jeweils in g/l und bezogen auf das Volumen des Tragkörpers, in Washcoatschicht A und Washcoatschicht B gleich sind; und
- das Verhältnis der Konzentrationen von Platin und Palladium in Washcoatschicht A zu Platin und Palladium in Washcoatschicht B, jeweils bezogen auf die Gesamtmasse der jeweiligen Washcoatschicht, gerechnet jeweils in g/l, bezogen auf das Volumen des Tragkörpers, 1:1 bis 1:5 beträgt.

Ausgestaltungen des erfindungsgemäßen Verfahrens hinsichtlich des Stickoxid-Speicherkatalysators entsprechen den oben stehenden Beschreibungen.

Die Erfindung wird in den nachstehenden Beispielen und Figuren näher erläutert.

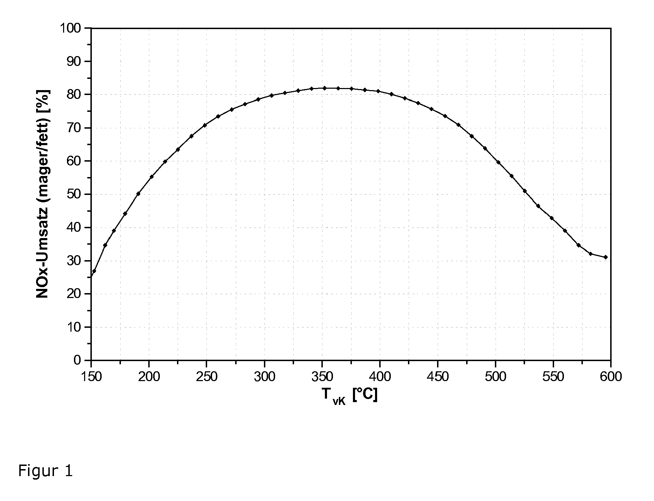

Figur 1: NOx-Konvertierung des Katalysators K1 in Abhängigkeit von der Temperatur.

### Beispiel 1

Zur Herstellung eines erfindungsgemäßen Katalysators wird ein wabenförmiger Keramikträger mit einer ersten Washcoatschicht A beschichtet, die Pt, Pd und Rh geträgert auf einem Lanthan-stabilisiertem Alumina, Ceroxid in einer Menge 125 g/l, sowie 20 g/l Bariumoxid und 15 g/l Magnesiumoxid enthält. Die Beladung von Pt und Pd beträgt dabei 50 g/cft (1,766 g/l) und 5 g/cft (0,177 g/l) und die Gesamtbeladung der Washcoatschicht 300 g/l bezogen auf das Volumen des Keramik-Trägers. Auf die erste Washcoatschicht wird eine weitere Washcoatschicht B aufgebracht, die ebenfalls Pt und Pd sowie Rh geträgert auf einem Lanthan-stabilisiertem Alumina enthält. Die Beladung von Pt, Pd und Rh in dieser Washcoatschicht beträgt 50 g/cft (1,766 g/l), 5 g/cft (0,177 g/l) und 5 g/cft (0,177 g/l). Die Washcoatschicht B enthält außerdem 55 g/l Ceroxid bei einer Washcoatbeladung der Schicht B von 101 g/l.
Der so erhaltene Katalysator wird nachstehend K1 genannt.

### Beispiele 2 bis 6

Beispiel 1 wurde wiederholt mit dem Unterschied, dass die in nachstehender Tabelle 1 angegebenen Ceroxid- bzw Edelmetallmengen eingesetzt wurden. Die so erhaltenen Katalysatoren werden K2 bis K6 genannt.

**Tabelle 1**

| Katalysator | Ceroxid Washcoat A [g/l] | Ceroxid Washcoat B [g/l] | Ceroxid-Verhältnis / B/A | (Pt+Pd)-Konzentr. B/A |
|---|---|---|---|---|
| K1 | 125 | 55 | 1 / 2,27 | 2,98 / 1 |
| K2 | 150 | 30 | 1 / 5,00 | 4,30 / 1 |
| K3 | 110 | 110 | 1 / 1,00 | 1,83 / 1 |
| K4 | 152,8 | 67,2 | 1 / 2,27 | 2,91 / 1 |
| K5 | 110 | 22 | 1 / 5,00 | 4,22 / 1 |
| K6 | 180 | 60 | 1 / 3,00 | 3,36 / 1 |

Bestimmung der NOx-Konvertierung von K1
a) Zunächst wurde K1 16h bei 800°C in hydrothermaler Atmosphäre gealtert.
b) Die NOx-Konvertierung des erfindungsgemäßen Katalysators K1 in Abhängigkeit von der Temperatur vor dem Katalysator wurde in einem Modellgasreaktor im sog. NOx-Umsatztest bestimmt.
In diesem wird synthetisches Abgas mit einer Stickstoffmonoxidkonzentration von 500ppm, jeweils 10 Vol.-% Kohlenstoffdioxid und Wasser, einer Konzentration von 50ppm eines kurzkettigen Kohlenwasserstoffgemisches (bestehend aus 33 ppm Propen und 17 ppm Propan) sowie einem Restsauerstoffgehalt von 7 Vol.-% bei einer Raumgeschwindigkeit von 50k/h in einem Modellgasreaktor über die jeweilige Katalysatorprobe geleitet, wobei die Gasmischung abwechselnd 80s lang einen Sauerstoffüberschuss enthält ("mageres" Gasgemisch mit Luftzahl λ von 1,47) währenddessen Stickoxide eingespeichert werden, und zur Regeneration der Katalysatorprobe 10s lang ein Sauerstoffdefizit aufweist ("fetts" Gasgemisch mit Luftzahl λ von 0,92; durch Zumischen von 5,5 Vol.-% Kohlenstoffmonoxid bei gleichzeitiger Absenkung des Restsauerstoffgehalts auf 1 Vol.-%).
Dabei wird die Temperatur mit 7,5 °C/min von 600°C auf 150°C abgesenkt und der Umsatz über jeden 90s dauernden Mager- Fett-Zyklus ermittelt. Die NOx Regenerationsfähigkeit bei 200°C ist wichtig, um Fahrverhalten im städtischen Bereich abzubilden, bei 450°C für Autobahnfahrten. Um die Euro 6 Abgasnorm zu erfüllen, ist es dabei besonders wichtig über diesen gesamten Temperaturbereich eine hohe NOx-Regenerationsfähigkeit zu zeigen.
Figur 1 zeigt die so bestimmte NOx-Konvertierung des erfindungsgemäßen Katalysators 1. Demnach beträgt der Umsatz bei 200°C 54% und bei 450°C 74%.

## Patentansprüche

1. Stickoxid-Speicherkatalysator aus mindestens zwei katalytisch aktiven Washcoatschichten auf einem Tragköper,
wobei
- eine untere Washcoatschicht A Ceroxid in einer Menge von 110 bis 180 g/l bezogen auf das Volumen des Tragkörpers, eine Erdalkaliverbindung und/oder eine Alkaliverbindung, sowie Platin und Palladium enthält;
- eine obere Washcoatschicht B, die über der Washcoatschicht A angeordnet ist, Ceroxid, sowie Platin und Palladium enthält und frei ist von Alkali- und Erdalkaliverbindungen;
- das Verhältnis von Ceroxid in Washcoatschicht A zu Ceroxid in Washcoatschicht B, gerechnet jeweils in g/l, bezogen auf das Volumen des Tragkörpers, 1:1 bis 5:1 beträgt, wobei die Summe von Ceroxid in Washcoatschicht A und Washcoatschicht B, gerechnet in g/l und bezogen auf das Volumen des Tragkörpers, 132 bis 240 g/l beträgt;
- das Verhältnis Pt: Pd gerechnet jeweils in g/l, bezogen auf das Volumen des Tragkörpers, in Washcoatschicht A und Washcoatschicht B gleich ist und 2:1 bis 20:1 beträgt;
- die Summe von Platin und Palladium, gerechnet jeweils in g/l und bezogen auf das Volumen des Tragkörpers, in Washcoatschicht A und Washcoatschicht B gleich sind; und
- das Verhältnis der Konzentrationen von Platin und Palladium in Washcoatschicht A zu Platin und Palladium in Washcoatschicht B, jeweils bezogen auf die Gesamtmasse der jeweiligen Washcoatschicht, gerechnet jeweils in g/l, bezogen auf das Volumen des Tragkörpers, 1:1 bis 1:5 beträgt.

2. Stickoxid-Speicherkatalysator nach Anspruch 1, **dadurch gekennzeichnet, dass** die Washcoatschicht B Ceroxid in einer Menge von 22 bis 120 g/l enthält.

3. Stickoxid-Speicherkatalysator nach Anspruch 1, **dadurch gekennzeichnet, dass** die Washcoatschicht A Ceroxid in einer Menge von 110 bis 160 g/l enthält.

4. Stickoxid-Speicherkatalysator nach einem oder mehreren der Ansprüche 1 bis 3, **dadurch gekennzeichnet, dass** die Gesamt-Washcoatbeladung des Tragkörpers 300 bis 600g/l, bezogen auf das Volumen des Tragkörpers, beträgt.

5. Stickoxid-Speicherkatalysator Anspruch 4, **dadurch gekennzeichnet, dass** die Beladung mit Washcoatschicht A 150 bis 500 g/l und die Beladung mit Washcoatschicht B 50 bis 300 g/l, jeweils bezogen auf das Volumen des Tragkörpers, beträgt.

6. Stickoxid-Speicherkatalysator nach Anspruch 4, **dadurch gekennzeichnet, dass** die Beladung mit Washcoatschicht A 250 bis 300g/l und mit Washcoatschicht B 50 bis 150 g/l, jeweils bezogen auf das Volumen des Tragkörpers, beträgt.

7. Stickoxid-Speicherkatalysator nach einem oder mehreren der Ansprüche 1 bis 6, **dadurch gekennzeichnet, dass** das Verhältnis Platin zu Palladium 4:1 bis 18:1 beträgt.

8. Stickoxid-Speicherkatalysator nach einem oder mehreren der Ansprüche 1 bis 6, **dadurch gekennzeichnet, dass** das Verhältnis Platin zu Palladium 6:1 bis 16:1 beträgt.

9. Stickoxid-Speicherkatalysator nach einem oder mehreren der Ansprüche 1 bis 8, **dadurch gekennzeichnet, dass** Washcoatschicht A und/oder Washcoatschicht B Rhodium enthalten.

10. Stickoxid-Speicherkatalysator nach Anspruch 9, **dadurch gekennzeichnet, dass** Rhodium in Mengen von 0,003 bis 0,35 g/l, bezogen auf das Volumen des Tragkörpers, vorliegt.

11. Stickoxid-Speicherkatalysator nach einem oder mehreren der Ansprüche 1 bis 10, **dadurch gekennzeichnet, dass** die Erdalkaliverbindung in Washcoatschicht A Magnesiumoxid, Bariumoxid und/oder Strontiumoxid ist.

12. Stickoxid-Speicherkatalysator nach Anspruch 1, **dadurch gekennzeichnet, dass** er
- eine untere Washcoatschicht A, die
o Ceroxid in einer Menge von 100 bis 160 g/l,
o Platin und Palladium im Verhältnis 10:1, sowie
o Magnesiumoxid und/oder Bariumoxid; enthält und
- eine obere Washcoatschicht B über der unteren Washcoatschicht A angeordnet ist, die
o keine Erdalkaliverbindung und keine Alkaliverbindung,
o Platin und Palladium im Verhältnis 10:1, sowie
o Ceroxid in einer Menge von 45 bis 65 g/l
enhältt, wobei die Washcoatschicht A in Mengen von 250 bis 350 g/l und die Washcoatschicht B in Mengen von 80 bis 130 g/l vorliegt und wobei sich die Mengenangabe g/l jeweils auf das Volumen des Tragkörpers bezieht.

13. Verfahren zur Konvertierung von NOₓ in Abgasen von Kraftfahrzeugen, die mit mager betriebenen Motoren betrieben werden, **dadurch gekennzeichnet, dass** das Abgas über einen Stickoxid-Speicherkatalysator aus mindestens zwei katalytisch aktiven Washcoatschichten auf einem Tragköper geleitet wird,
wobei
- eine untere Washcoatschicht A Ceroxid in einer Menge von 110 bis 180 g/l bezogen auf das Volumen des Tragkörpers, eine Erdalkaliverbindung und/oder eine Alkaliverbindung, sowie Platin und Palladium enthält;
- eine obere Washcoatschicht B, die über der Washcoatschicht A angeordnet ist, Ceroxid, sowie Platin und Palladium enthält und frei ist von Alkali- und Erdalkaliverbindungen;
- das Verhältnis von Ceroxid in Washcoatschicht A zu Ceroxid in Washcoatschicht B, gerechnet jeweils in g/l, bezogen auf das Volumen des Tragkörpers, 1:1 bis 5:1 beträgt, wobei die Summe von Ceroxid in Washcoatschicht A und Washcoatschicht B, gerechnet in g/l und bezogen auf das Volumen des Tragkörpers, 132 bis 240 g/l beträgt;
- das Verhältnis Pt:Pd gerechnet jeweils in g/l, bezogen auf das Volumen des Tragkörpers, in Washcoatschicht A und Washcoatschicht B gleich ist und 2:1 bis 20:1 beträgt;
- die Summe von Platin und Palladium, gerechnet jeweils in g/l und bezogen auf das Volumen des Tragkörpers, in Washcoatschicht A und Washcoatschicht B gleich sind; und
- das Verhältnis der Konzentrationen von Platin und Palladium in Washcoatschicht A zu Platin und Palladium in Washcoatschicht B, jeweils bezogen auf die Gesamtmasse der jeweiligen Washcoatschicht, gerechnet jeweils in g/l, bezogen auf das Volumen des Tragkörpers, 1:1 bis 1:5 beträgt.
